Europäisches Patentamt

(19) European Patent Office

Office européen des brevets

(11) Publication number: 0 356 314
A2

## (12) EUROPEAN PATENT APPLICATION

(21) Application number: 89402285.4

(51) Int. Cl.⁵: F 04 D 29/26

(22) Date of filing: 11.08.89

(30) Priority: 15.08.88 JP 106991/88
26.01.89 JP 15172/89

(43) Date of publication of application:
28.02.90 Bulletin 90/09

(84) Designated Contracting States: DE ES GB IT

(71) Applicant: AKAISHI KINZOKU KOGYO CO., LTD.
499, Aioi-cho 2-chome
Kiryu City Gunma Pref., (JP)

(72) Inventor: Akaishi, Mineichi
3148, Hirosawa-Cho 2-Chome
Kiryu City Gunma Pref. (JP)

Ogino, Hiroshi
36-18, Wakamiya 2-Chome
Nakano-Ku Tokyo (JP)

Endo, Kenzo c/o AKAISHI KINZOKU KOGYO CO., LTD.
499, Aioi-Cho 2-Chome
Kiryu City Gunma Pref. (JP)

Konno, Itsuo
1430-25, Kawauchi-Cho 5-Chome
Kiryu City Gunma Pref. (JP)

(74) Representative: Le Brusque, Maurice et al
Cabinet Harlé et Phélip 21, rue de la Rochefoucauld
F-75009 Paris (FR)

(54) A multi-blade impeller for a cross-flow fan.

(57) A multi-blade impeller for a cross flow fan includes a plurality of axially elongate blade elements (11), at least two disc-like holder plates ( 12a, 12b, 12c) integrally connected to the blade elements (11), and a drive shaft (18) connected to at least one of the holder plates 12c) for rotating the impeller. The drive shaft (18) in its free end portion is of a non-circular cross-section, and has a circumferential groove The holder plate ( 12c) to be connected with the drive shaft (18) has a boss (21) having a center bore of a corresponding, non-circular cross-section, as well as radially inwardly projecting lugs The lugs are adapted to resiliently deflect axially during insertion of the free end portion into the boss (21), and then to snap into the circumferential groove in the free end portion of the drive shaft (18), for preventing unintentional withdrawal of the drive shaft (18) from the boss (21) of the holder plate ( 12c).

FIG.9

EP 0 356 314 A2

**Description**

# A MULTI-BLADE IMPELLER FOR A CROSS-FLOW FAN

The present invention relates to a multi-blade impeller for a cross flow fan, and pertains particularly to an impeller which includes a plurality of axially elongate blade elements each having a predetermined curvature in the cross-section, at least two disc-like holder plates axially spaced from each other and integrally connected to said blade elements, as well as a drive shaft connected to at least one of said holder plates for rotating the impeller.

Cross flow fan with such an impeller is known and widely used for various purposes. Conventionally, in order to produce an integral assembly of the blade elements, the holder plates and the drive shaft, each holder plate is formed with a plurality of slits which extend radially inwardly from the outer periphery of the relevant holder plate and are equiangularly spaced from each other. For receiving an associated blade element in each slit as tightly as possible and to thus avoid undesirable play or dislocation of the blade element in the finished product, each slit has a curvature corresponding to that of the blade element, and a width which is substantially the same as the thickness of the blade element.

Moreover, the drive shaft has to be positively secured to the holder plate such that torque can be transmitted to the holder plate without the risk of an unintentional axial disengagement of the shaft from the holder plate. To this end, the drive shaft may be formed with a free end portion of a non-circular cross-section, typically a substantially D-shaped cross-section, which is to be received in a boss portion of the holder plate and axially retained by a separate retainer in the form of a spring retainer ring or the like. When, however, the drive shaft is to be connected to an axially central holder plate between two end holder plates, the retainer ring cannot be readily mounted in place. A troublesome and time-consuming manual assembly becomes necessary which, besides increase in the number of the required components and production steps, makes it difficult to significantly reduce the production cost.

It is therefore an object of the present invention to provide an improved impeller for a cross flow fan, in which the drive shaft can be simply and reliably connected to the holder plate, and positively prevented from unintentional axial disengagement therefrom.

To this end, according to the present invention, there is provided an impeller as set forth in the opening paragraph, wherein the drive shaft has a free end portion of a non-circular cross-section which is formed with a circumferential groove, the holder plate to be connected with said drive shaft has a boss with a center bore of a non-circular cross-section corresponding to that of said free end portion of the drive shaft, and said boss is integrally formed with at least one resilient lug projecting radially inwardly therefrom, said lug being adapted to deflect axially during insertion of said free end portion into said boss, and subsequently to snap into said circumferential groove in the free end portion of said drive shaft, for preventing withdrawal of said drive shaft from said boss of the holder plate.

With the above-mentioned arrangement of the present invention, the drive shaft can be readily connected to the boss of the holder plate in a form-locking manner, and positively retained in place simply by inserting the free end portion into the center bore of the boss. On this occasion, at least one resilient lug projecting radially inwardly from the boss deflects axially during insertion of the free end portion of the drive shaft into the boss, and subsequently snaps into the circumferential groove in the free end portion. Thus, without requiring separate retainer ring and hence troublesome and time-consuming assembly thereof, it is possible not only to prevent unintentional withdrawal of the drive shaft from the boss of the holder plate, but also to significantly reduce the production cost.

According to one advantageous embodiment of the present invention, the boss of the holder plate to be connected to the drive shaft is formed with two or more longitudinal slits and is thereby circumferentially divided into two or more segments, and at least one of the segments has the above-mentioned resilient lug. Circumferential division of the boss into two or more segments serves to improve the flexibility of the resilient lug in the axial direction, and to facilitate the deflection of the lug when the free end portion of the drive shaft is inserted into the boss.

According to another advantageous embodiment of the present invention, the resilient lug has a tapered end to provide a further improved flexibility. In this connection, the lug may be arranged such that, by applying a predetermined axial force, the lug can be axially deflected and thereby disengaged from the circumferential groove to permit withdrawal of the drive shaft whenever necessary, while avoiding unintentional withdrawal thereof.

A facilitated connection between the holder plate and the drive shaft proved to be particularly advantageous, when the resilient lug is provided for a holder plate arranged in an axially intermediate region of the impeller.

The drive shaft may consist of an output shaft of an electric motor to eliminate provision of a separate coupling shaft. In this case, the arrangement may be such that one axial end of the impeller does not include the holder plate and leaves a space circumscribed by, and radially inwardly of the blade elements to open to the above-mentioned axial end, with the electric motor being arranged at least partly in the open space. By this, during the rotation of the impeller, the electric motor can be cooled effectively by the blade elements, per se, without requiring the provision of a separate cooling means for the motor.

Fig 1 is a plan view of a cross-flow fan to which the present invention may be applied;

Fig. 2 is a front view of the fan shown in Fig. 1;

Fig. 3 is a schematic cross-sectional view taken substantially along the line II-II in Fig. 2, showing the mode of air flow through the cross-flow fan;

Fig. 4 is a front view of the impeller assembly shown in Fig. 1;

Fig. 5 is a side view of the assembly shown in Fig. 4;

Fig. 6 is a side view of the holder plate used to form the assembly shown in Fig. 4;

Fig. 7 is a fragmentary side view of the holder plate, showing the mode of assembly in which each blade element is fixedly connected into the slit in the holder plate;

Fig. 8 is a front view showing one example of the method for manufacturing a plurality of impeller assemblies;

Fig. 9 is a front view of the impeller assembly according to one embodiment of the present invention;

Fig. 10 is a fragmentary longitudinal-sectional view showing the connection between the drive shaft and a holder plate;

Fig. 11 is a fragmentary side view of the connection shown in Fig. 10;

Figs. 12 and 13 are respectively front view and side view of the drive shaft shown in Figs. 10 and 11;

Fig. 14 is a longitudinal-sectional view of one example of the holder plate including the boss with resilient lugs;

Fig. 15 is a sectional view similar to Fig. 14 and showing another example of the boss with resilient lugs;

Figs. 16 and 17 are respectively front view and side view of the impeller assembly according to another embodiment of the present invention;

Fig. 18 is a front view showing another example of the impeller assembly to which the present invention may be applied;

Figs. 19a and 19b are perspective views of the blade elements in the impeller assembly of Fig. 18;

Fig. 20 is a schematic front view of another example of the cross-flow fan with a plurality of impeller assemblies to which the present invention may be applied; and

Fig. 21 is a fragmentary view in an enlarged scale, showing the engagement of the blade elements of the impeller assemblies of Fig. 20.

The present invention will now be explained in further detail, by referring to some preferred embodiments shown in the attached drawings.

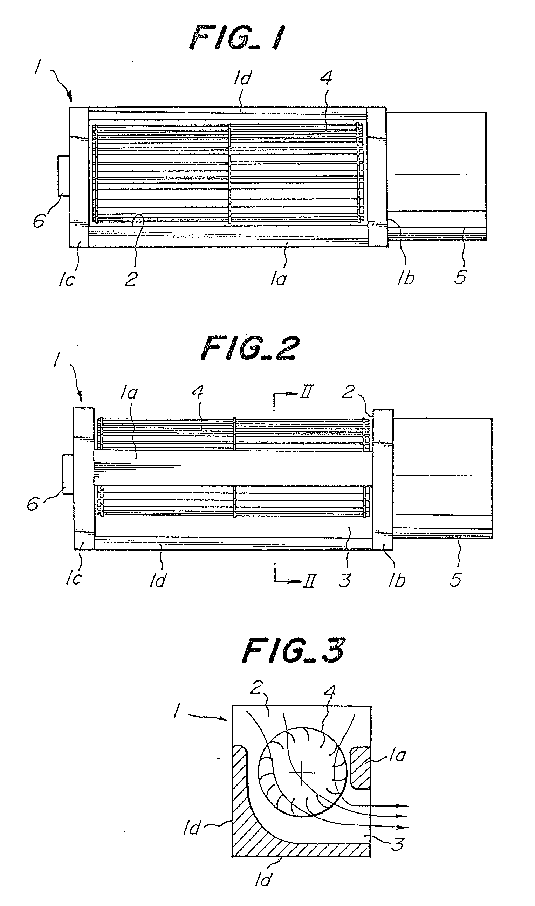

Referring now to Figs. 1 and 2, there is shown one example of a cross flow fan to which the present invention may be applied, and which includes an axially elongate casing 1 with a front wall 1a, a pair of side walls 1b and 1c, and a bottom and rear wall 1d of substantially L-shaped configuration. These walls 1a to 1d define a suction opening 2 in the upper portion of the casing 1, and a discharge opening 3 in the lower portion thereof. The impeller 4 according to the present invention is rotatably arranged inside of the casing 1, and is drivably connected at its one end to an electric motor 5 mounted on one side wall 1b while rotatably journalled on the other end by a bearing 6 secured to the other side wall 1c.

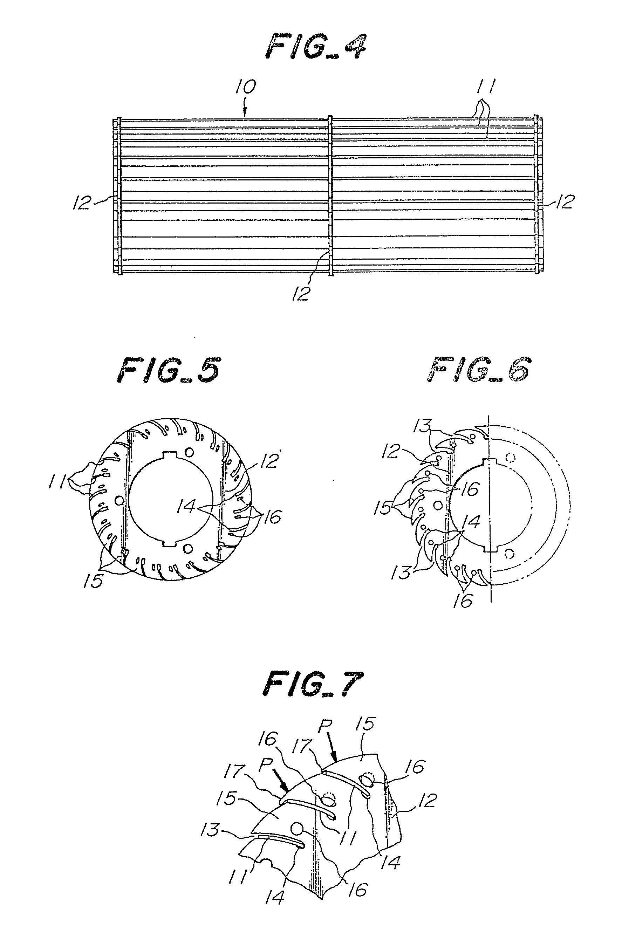

A typical flow pattern of air stream is schematically shown in Fig. 3, from which it will be seen that the cross-flow fan features a unique air stream flow indicated by thin line arrows, which is directed from the outer periphery of the impeller 4 on the side of the suction opening 2 into the inner space of the impeller 4, and further toward the outer periphery of the impeller 4 on the side of the discharge opening 3, i.e. across the impeller, as widely known in the art.

As particularly shown in Figs. 4, 5 and 6, the impeller 4 includes an integral assembly 10 formed of a plurality of axially elongate blade elements 11, and at least two disc-like holder plates 12 axially spaced from each other and integrally connected with the blade elements 11. Each blade element 11 has a predetermined curvature in the cross-section, and at least two cutouts (not shown) on one longitudinal edge which are axially spaced from each other by an amount corresponding to the axial distance between the holder plates 12. On the other hand, each holder plate 12 has, for receiving the blade element 11, a plurality of slits 13 with a curvature corresponding to that of the blade element 11. These slits 13 are equidistantly or equiangularly spaced from each other and extend radially inwardly from the outer periphery of the holder plate 12.

More specifically, as also shown in Fig. 7, the slits 13 in the holder plate 12 are prepared to have an initial width over the entire length, which is greater than the thickness of the blade element 11. Each slit 13 has a radially inner end 14 which is much wider than the remaining portions of the slits, and widens on the concave side thereof. A radially outwardly protruding segmentary region 15 is defined by each neighboring pair of the slits 13, and is formed with at least one perforation 16 of suitable configuration which is located near the inner end 14 of the relevant slit 13 on convex side thereof.

In order to from the integral assembly of the blade elements 11 and the holder plates 12, each blade element 11 is inserted into the associated slit 13 of the holder plate 12, with the above-mentioned cutout brought into engagement with the inner end 14 of the slit 13 so as to assure an accurate positioning of the blade element. Because the initial width of the slits 13 is greater than the thickness of the blade element 11, as mentioned above, the insertion of the blade elements 11 into the slits 13 does not require a delicate manipulation, and can be carried out very easily and in short a time. There is no risk of the blade elements 11 being subjected to undesired deformation during the insertion into the slits.

When all the blade elements 11 have been positioned in the respective slits 13, the outer periphery of the holder plates 12 are applied with a pressure P directed in a predetermined direction, by making use of an appropriate pressure roll, not shown.

The pressure P induces such a deformation of the segmentary regions 15 that each region 15 on its radially outer edge 17 is tightly urged against the opposite side wall of the neighboring region 15, with each blade element 11 being fixedly clamped by, and between, opposite side walls of the relevant slit 13.

The deformation of the segmentary regions 15 can be carried out in a very facilitated manner, due to the presence of relatively wide inner end 14 of each slit 13 and of the perforation 16 in each segmentary region 15 near such an inner end 14, or due to a smaller effective width of each segmentary region near its radially innermost location. The above-mentioned deformation of the segmentary regions 15 accompanies, and is clearly recognizable by, a deformation of the perforation 16. More particularly, in case of the perforations 16 of initially circular configuration, for example, after the application of the pressure P with a resultant deforma tion of the segmentary regions 15, the perforation 16 is deformed to assume a substantially oval configuration.

If necessary, the outer periphery of the holder plate 12 may be further machined, e.g. with a grinder or the like, to obtain a smooth outer circular contour with an improved accuracy.

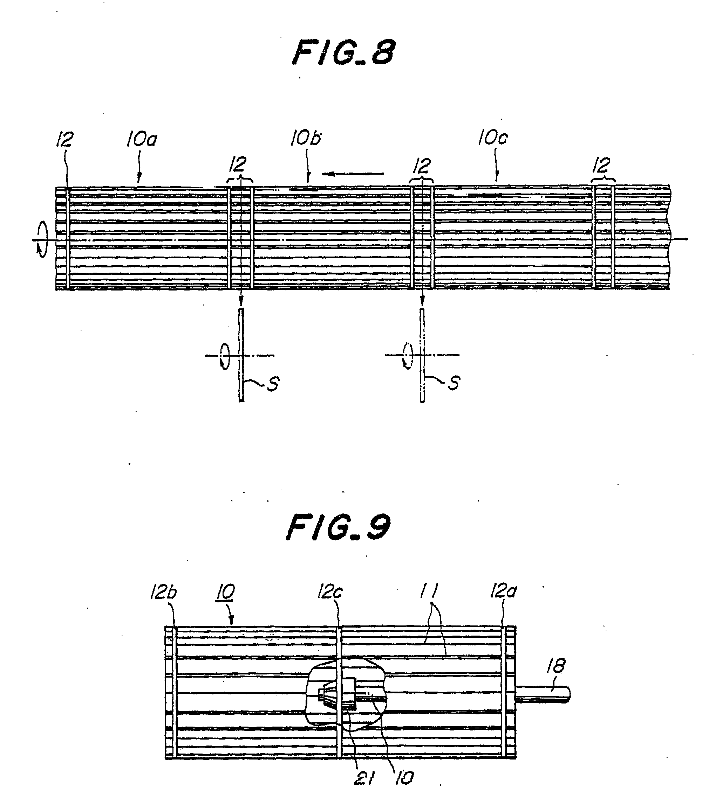

There is shown in Fig. 8 one example of a method of manufacturing, with an improved productivity, a plurality of integral impeller assemblies 10a, 10b, 10c, each composed of the blade elements 11 and the holder plates 12. Here, continuous bodies each formed of a plurality of longitudinally aligned blade elements 11, and having a length which is several times greater than that of the blade element 11, are assembled with a 16 required number of the holder plates 12 to initially form a longitudinally aligned assemblies 10a, 10b, 10c connected with each other as an integral body, which is then cut at predetermined locations to separate the assemblies 10a, 10b, 10c from each other. Such a separation of the assemblies 10a, 10b, 10c can be carried out either sequentially by a single circular saw S, or simultaneously by a plurality of circular saws S, while rotating the integral body of the assemblies 10a, 10b, 10c.

Each impeller assembly 10, which may be manufactured as above, is further provided with two shafts on both sides thereof, one shaft 18 being connected to the electric motor 5 as the drive shaft, with the other shaft (not shown) journalled by the bearing 6. As particularly shown in Figs. 9 to 14, the assembly 10 according to the embodiment illustrated therein includes three holder plates 12a, 12b and 12c of which two holder plates 12a, 12b are arranged on the axial ends of the assembly 10, while the third holder plate 12c is arranged in the axially intermediate region of the assembly 10. The drive shaft 18 is connected to the last-mentioned holder plate 12c in a form-locking manner.

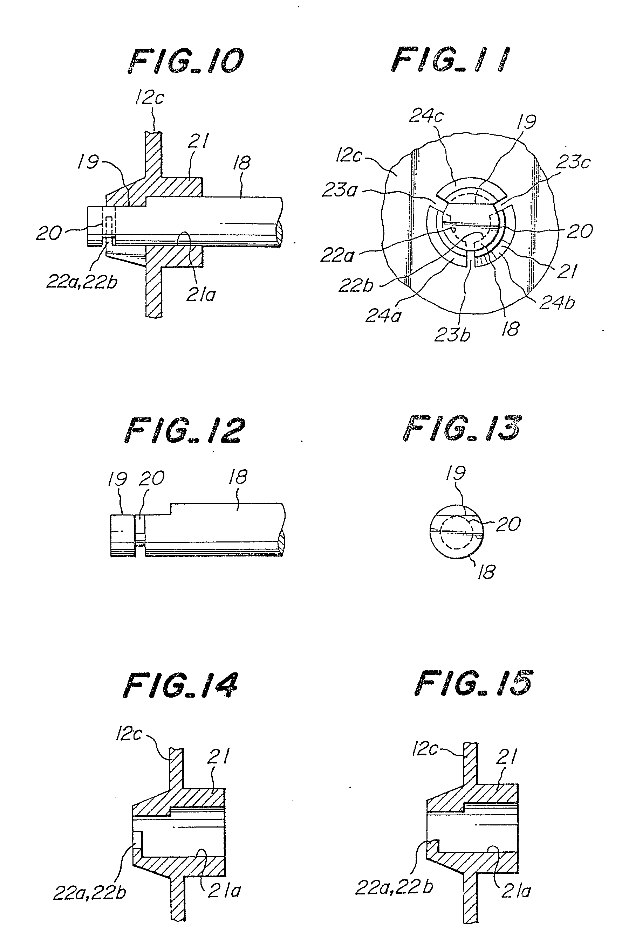

To this end, the drive shaft 18 has a free end portion 19 of a non-circular, substantially D-shaped cross-section, as shown in Figs. 10, 12 and 13, which is formed with a circumferential groove 20. The holder plate 12c to be connected with the drive shaft 18 has a boss 21 which, as shown in Fig. 11, is formed with a center bore 21a of a non-circular, substantially D-shaped cross-section corresponding to that of the free end portion 19 of the drive shaft 18. The boss 21 is integrally formed with resilient lugs 22a, 22b projecting radially inwardly therefrom. The lugs 22a, 22b are adapted to deflect axially during the insertion of the free end portion 19 into the center bore 21a of the boss 21, and to subsequently snap into the circumferential groove 20 in the free end portion 19 of the drive shaft 18, thereby to prevent unintentional withdrawal of the drive shaft 18 from the boss 21 of the holder plate 12c.

With the above-mentioned arrangement of the present invention, the drive shaft 18 can be readily connected to the boss 21 of the holder plate 12c in a form-locking manner, and positively retained in place, simply by inserting the free end portion 19 into the center bore 21a of the boss 21. On this occasion, the lugs 22a, 22b projecting radially inwardly from the boss 21 deflects axially during insertion of the free end portion 19 of the drive shaft 18 into the boss 21. The lugs 22a, 22b subsequently snap into the circumferential groove 20 in the free end portion 19. Thus, without requiring separate retainer ring and hence troublesome and time-consuming assembly thereof, it is possible to prevent unintentional withdrawal of the drive shaft 18 from the boss 21 of the holder plate 12c, and to significantly reduce the production cost of the impeller assembly 10.

As particularly shown in Fig. 11, the boss 21 of the holder plate 12c to be connected to the drive shaft 18 is preferably formed with three longitudinal slits 23a, 23b, 23c, and is thereby circumferentially divided into three segments 24a, 24b, 24c. Of these, two segments 24a, 24b define the arcuate portion of the inner contour of the center bore 21a of the D-shaped cross-section, and are provided with the above-mentioned resilient lugs 22a, 22b. The remaining segment 24c defining a straight portion of the inner contour of the center bore 21a of the D-shaped cross-section is not provided with the lug. Circumferential division of the boss 21 into three segments 24a, 24b, 24c serves to improve the flexibility of the lugs 22a, 22b in the axial direction, and to facilitate the deflection of the lugs 22a, 22b when the free end portion 19 of the drive shaft 18 is inserted into the boss 21.

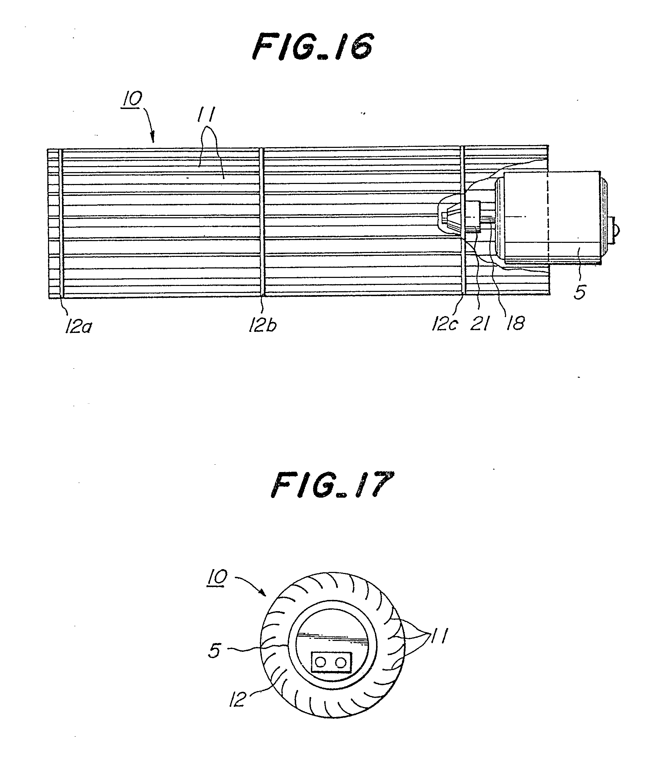

The resilient lugs 22a, 22b may each have a somewhat tapered end as shown in Fig. 15, to provide a further improved flexibility. In this connection, each lug 22a, 22b may be arranged such that, by applying a predetermined axial force in a direction opposite to the insertion direction, they can be axially deflected and thereby disengaged from the circumferential groove 20 in the free end portion 19 of the drive shaft 18 to permit withdrawal of the drive shaft whenever necessary, while avoiding unintentional withdrawal thereof.

The drive shaft 18 may consist of an output shaft of the electric motor 5 to eliminate provision of a separate coupling shaft. In this case, as shown in Figs. 16 and 17, the arrangement may be such that one axial end of the impeller assembly 10 does not include the holder plate 12 and leaves a space circumscribed by, and radially inwardly of the blade elements 11 to open to the above-mentioned axial end, with the electric motor 5 arranged at least partly in said open space. By this, during the rotation of the impeller, the electric motor 5 can be cooled effectively by the blade elements 11, per se, without requiring provision of a separate cooling means for the motor 5.

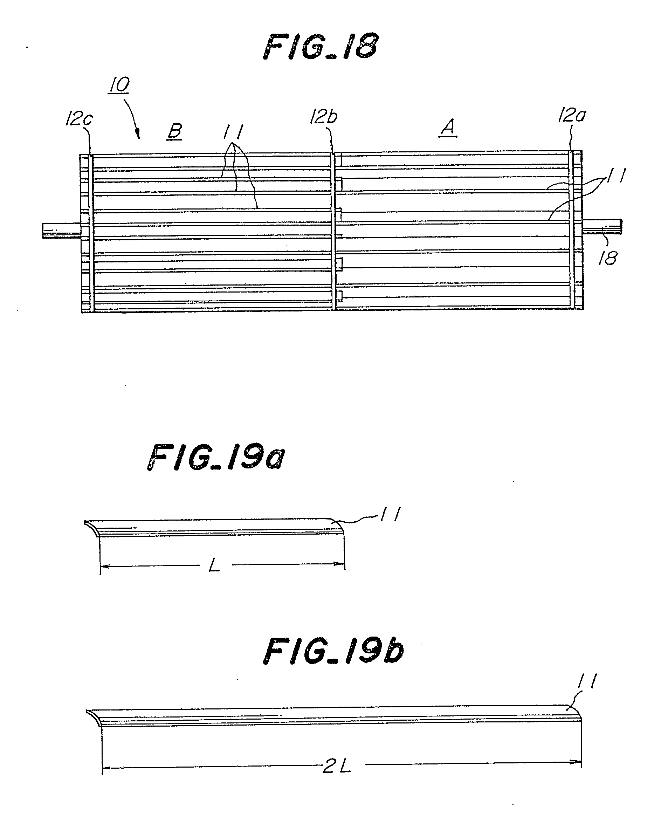

The present invention may be applied to an impeller assembly including three or more holder plates, and divided into two or more longitudinally aligned sections in which the number of blade elements arranged in one section differs from that in the other section. Thus, as shown in Fig. 18, the impeller assembly 10 includes three holder plates 12a, 12b, 12c, and is longitudinally divided into section A between a first pair of holder plates 12a, 12b, and section B between a second pair of holder plates 12b, 12c. The section A includes a predetermined number N of the blade elements 11, while the section B includes another predetermined number 2N of the blade elements 11. To this end, different sets of the blade elements 11 may be used, wherein each blade element 11 of the first set as shown in Fig. 19a has a length L and is used only for the section A, while each blade element 11 of the second set as shown in Fig. 19b has a length of approximately 2L and is used for the sections A and B. By longitudinally dividing the impeller assembly 10 into a plurality of sections A and B with mutually different number of the blade elements 11, it becomes possible readily to afford different ventilating capacity or discharge rate for each section. This arrangement is particularly suitable in combining a single cross-flow fan with a plurality of appliances requiring mutually different amount of air flow rate.

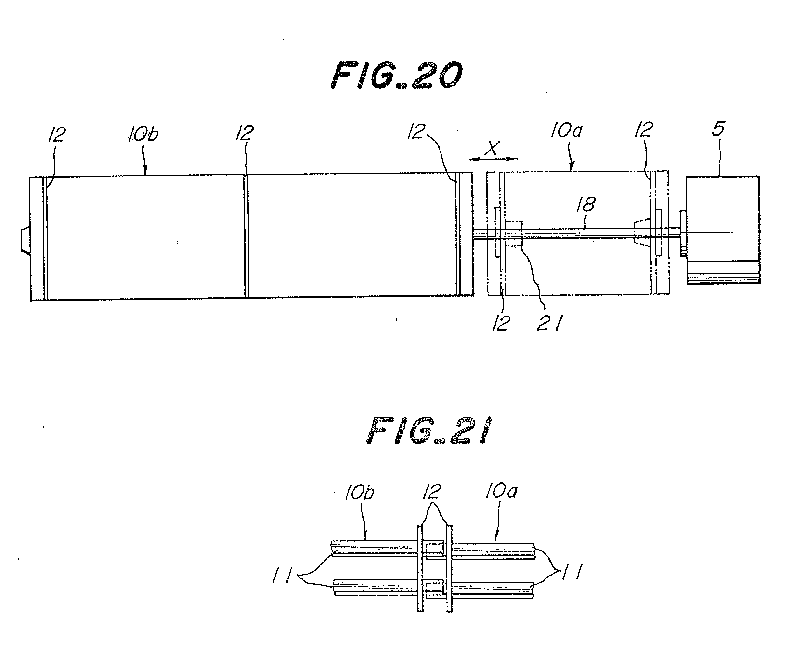

The present invention may be applied to a cross-flow fan including two or more impeller assemblies 10a, 10b which are longitudinally aligned with each other, and adapted to be engaged with or disengaged from the other. That is, the cross-flow fan includes a first impeller assembly 10a permanently connected to the electric motor 5, and a second impeller assembly 10b which is axially slidable toward and away from the first impeller assembly 10a. When the two impeller assemblies 10a, 10b are spaced from each other, as shown in Fig. 20, only the first impeller assembly 10a is driven by the electric motor 5. On the other hand, when the second impeller assembly 10b is axially moved toward the first impeller assembly 10a, the blade elements 11 of the two assemblies 10a, 10b are engaged with each other, as shown in Fig. 21, and function as a kind of clutch so that the second assembly 10b can also be driven by the electric motor 5. Instead of using two or more cross-flow fans in combination with a plurality of appliances or when their discharge rate is to be changed stepwisely, the above-mentioned arrangement allows a substantial space saving and serves to significantly reduce the entire cost.

It will be readily appreciated from the foregoing description that the present invention provides an improved multi-blade impeller for a cross-flow fan which is very easy to manufacture on a mass-production basis and to realize a uniform product quality. While the present invention has been described with reference to certain preferred embodiments, by way of examples only, a number of variations and/or modifications may be made without departing from the scope of the invention.

## Claims

1. A multi-blade impeller for a cross flow fan, including a plurality of axially elongate blade elements each having a predetermined curvature in the cross-section, at least two disc-like holder plates axially spaced from each other and integrally connected to said blade elements, as well as a drive shaft connected to at least one of said holder plates for rotating the impeller, characterized in that the drive shaft (18) has a free end portion (19) of a non-circular cross-section which is formed with a circumferential groove (20), that the holder plate (12; 12c) to be connected with said drive shaft (18) has a boss (21) with a center bore (21a) of a non-circular cross-section corresponding to that of said free end portion (19) of the drive shaft (18), and that said boss (21) is integrally formed with at least one resilient lug (22a, 22b) projecting radially inwardly therefrom, said lug (22a, 22b) being adapted to deflect axially during insertion of said free end portion (14) into said boss (21), and subsequently to snap into said circumferential groove (20) in the free end portion (19) of said drive shaft (18), for preventing withdrawal of said drive shaft (18) from said boss (21) of the holder plate (12; 12c).

2. The impeller as claimed in Claim 1, characterized in that said boss (21) of the holder plate (12; 12c) to be connected to said drive shaft (18) is formed with two or more longitudinal slits (23a, 23b, 23c) and is thereby circumferentially divided into two or more segments (24a, 24b, 24c), at least one of said segments (24a, 24b) having said resilient lug (22a, 22b).

3. The impeller as claimed in Claim 1 or 2, characterized in that said resilient lug (22a, 22b) has a tapered end.

4. The impeller as claimed in any one of claims 1 to 3, characterized in that said boss (21) is provided for a holder plate (12b, 12c) arranged in an axially intermediate region of the impeller.

5. The impeller as claimed in any one of Claims 1 to 4, characterized in that said drive shaft (18) consists of an output shaft of an electric motor (5).

6. The impeller as claimed in Claim 5, characterized in that one axial end of the impeller does not include the holder plate and leaves a space circumscribed by, and radially inwardly of the blade elements (11) to open to said one axial end, said electric motor (5) being arranged at least partly in said space.

## FIG_1

## FIG_2

## FIG_3

## FIG_4

10

11

12

12

12

## FIG_5

11

12

14

16

15

## FIG_6

13

12

16

15

14

13

16

## FIG_7

16 17 P 15

17 P 16

15

13 11

11

14

14 16

12

14

## FIG.8

## FIG.9

FIG.10

FIG.11

FIG.12

FIG.13

FIG.14

FIG.15

# FIG_16

# FIG_17

## FIG. 18

## FIG. 19a

## FIG. 19b

# FIG.20

# FIG.21

EP 0 356 314 A2